(19) **Europäisches Patentamt / European Patent Office / Office européen des brevets**

(11) **EP 3 377 862 B1**

(12) **FASCICULE DE BREVET EUROPEEN**

(45) Date de publication et mention de la délivrance du brevet:
**28.04.2021 Bulletin 2021/17**

(21) Numéro de dépôt: **16798193.5**

(22) Date de dépôt: **21.11.2016**

(51) Int Cl.:
*G01F 23/00* (2006.01)   *G01F 23/26* (2006.01)

(86) Numéro de dépôt international:
**PCT/EP2016/078249**

(87) Numéro de publication internationale:
**WO 2017/085308 (26.05.2017 Gazette 2017/21)**

(54) **PROCÉDÉ DE DÉTECTION DU NIVEAU D'UN FLUIDE DANS UN ÉTAT LIQUIDE ET/OU SOLIDE DANS UN RÉSERVOIR ET SYSTÈME ASSOCIÉ**

VERFAHREN ZUM ERKENNEN DES FÜLLSTANDS EINER FLÜSSIGKEIT IN EINEM FLÜSSIGEN UND/ODER FESTEN ZUSTAND IN EINEM BEHÄLTER UND ZUGEHÖRIGES SYSTEM

METHOD FOR DETECTING THE LEVEL OF A FLUID IN A LIQUID AND/OR SOLID STATE IN A TANK AND ASSOCIATED SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.11.2015 FR 1561209**
**03.02.2016 FR 1650840**

(43) Date de publication de la demande:
**26.09.2018 Bulletin 2018/39**

(73) Titulaire: **Plastic Omnium Advanced Innovation and Research**
**1130 Bruxelles (BE)**

(72) Inventeurs:
• **SANOGO, Yacouba**
**60200 Compiègne (FR)**
• **CORNANGUER, Damien**
**Vancouver, Colombie-Britannique V6A 4B6 (CA)**

(74) Mandataire: **LLR**
**11 boulevard de Sébastopol**
**75001 Paris (FR)**

(56) Documents cités:
| | |
|---|---|
| FR-A1- 2 662 249 | US-A- 4 589 077 |
| US-A- 4 716 536 | US-A- 4 943 889 |
| US-A1- 2009 187 357 | US-A1- 2010 180 663 |
| US-A1- 2011 270 542 | |

**Description**

La présente invention concerne un procédé de détection du niveau d'un fluide dans un état liquide et/ou solide dans un réservoir au moyen d'une sonde capacitive. Plus particulièrement, l'invention s'applique à la mesure d'un niveau de carburant dans un réservoir à carburant pour véhicule automobile. L'invention s'applique également à la mesure d'un niveau d'une solution aqueuse d'urée dans un réservoir d'urée pour véhicule automobile.

De nombreux dispositifs ont été proposés à ce jour pour mesurer le niveau d'un liquide dans un réservoir et en particulier, dans un réservoir à carburant d'un véhicule automobile.

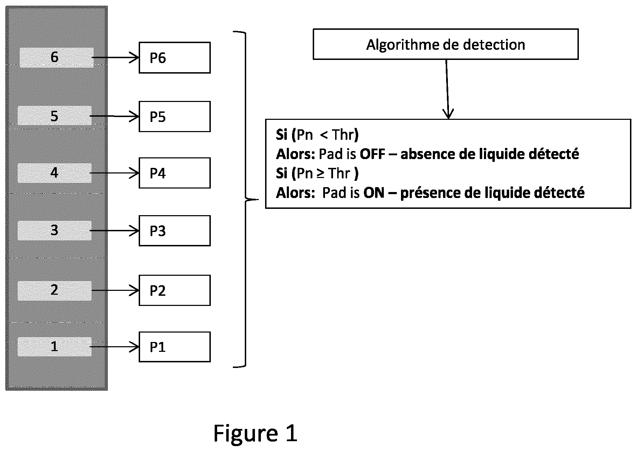

Un dispositif de mesure connu repose sur l'utilisation d'une sonde capacitive. Généralement, une telle sonde comprend une colonne d'éléments capacitifs. Les éléments capacitifs sont disposés les uns au-dessus des autres à intervalle régulier. Chaque élément capacitif est donc associé à un niveau donné dans le réservoir. Généralement, chaque élément capacitif fourni une information ou valeur représentative de sa valeur de capacité. Généralement, cette information est un nombre de comptage (« count number » en anglais) représentatif du nombre de phases de charge et de décharge de l'élément capacitif pendant une période de temps prédéterminée. Ce nombre de comptage est utilisé pour détecter la présence ou l'absence de liquide au niveau donné auquel l'élément capacitif est associé. La figure 1 illustre un algorithme connu pour détecter le niveau d'un liquide dans un réservoir, à partir des valeurs fournies par les éléments capacitifs. Dans cet algorithme connu, on compare la valeur (P1, P2, P3, P4, P5 et P6) fournie par chacun des éléments capacitifs (1, 2, 3, 4, 5 et 6) à un seuil de détection. La valeur de capacité de chaque élément capacitif peut varier en fonction par exemple de la température, de la constante diélectrique du fluide dans lequel les éléments capacitifs évoluent et de l'épaisseur du plastique dans lequel sont intégrés les éléments capacitifs. En ignorant ces variations comme le fait cet algorithme classique de l'art antérieur, la détermination du niveau de liquide dans le réservoir ne peut pas être robuste.

US 4 589 077 et US 2009/187357 décrivent des dispositifs de détection du niveau d'un fluide dans un réservoir au moyen d'une sonde capacitive, la sonde comprenant une colonne d'éléments capacitifs, chaque élément capacitif étant associé à un niveau donné dans le réservoir.

US 4 589 077 divulgue aussi un procédé dans lequel un calcul du niveau du liquide est d'abord effectué grâce notamment à la sonde capacitive et au recours à un facteur de correction issu de la comparaison entre la valeur de capacité mesurée de l'élément capacitif situé en dessous d'un élément capacitif identifié comme partiellement submergé et une valeur stockée représentative d'un élément capacitif submergé. Il est précisé que ce calcul de volume sera compensé par la température. Le facteur de compensation par la température intervient après que le niveau du liquide ait été défini et n'est appliqué qu'aux éléments 'capacitifs complètement submergés. Selon US 2009/187357, la compensation de température n'est effectuée qu'après que le niveau du liquide ait été déterminé et ce document ne précise pas que cette compensation par la température est appliquée à chacune des valeurs de capacité des éléments capacitifs de la colonne, qu'ils soient submergés ou non, pour déterminer la présence de liquide au niveau associé à l'élément capacitif.

Un des buts de l'invention est donc de proposer un procédé de détection du niveau d'un fluide (dans un état liquide et/ou solide) dans un réservoir au moyen d'une sonde capacitive permettant une détermination robuste du niveau de fluide dans le réservoir.

Dès lors, dans un mode de réalisation particulier de l'invention, il est proposé un procédé de détection du niveau d'un fluide (dans un état liquide et/ou solide) dans un réservoir au moyen d'une sonde capacitive, la sonde comprenant une colonne d'éléments capacitifs, chaque élément capacitif étant associé à un niveau donné dans le réservoir. Le procédé comprend les étapes suivantes consistant à, pour chaque élément capacitif :

- obtenir une valeur représentative de la capacité de l'élément capacitif ;
- obtenir une valeur de compensation en fonction d'une information de température ;
- calculer une valeur compensée à partir de la valeur représentative de la capacité de l'élément capacitif et de la valeur de compensation ;
- détecter la présence du fluide au niveau associé à l'élément capacitif, en comparant la valeur compensée à un seuil de détection prédéterminé.

Une mesure plus robuste du niveau de fluide dans le réservoir peut ainsi être réalisée puisqu'on compense automatiquement les changements dus à la variation de la température et la variation de la constante diélectrique du fluide est prise en compte dans l'aspect tout ou rien de la sonde capacitive.

Dans un mode de réalisation particulier, la sonde comprend au moins une thermistance apte à fournir ladite information de température.

Avantageusement, le procédé comprend les étapes suivantes consistant à, pour un élément capacitif courant à un niveau courant et un élément capacitif supérieur suivant à un niveau supérieur suivant :

- calculer une différence de valeur entre la valeur représentative de la capacité de l'élément capacitif courant et la valeur représentative de la capacité de l'élément capacitif supérieur suivant ;
- utiliser ladite différence de valeur calculée pour calculer ladite valeur compensée.

Dans un mode de réalisation avantageux, le procédé comprend en outre les étapes suivantes consistant à :

- détecter la présence d'un gradient de température le long de la sonde et déterminer un coefficient de compensation en fonction de ladite information de température ;
- calculer une différence de valeur compensée en appliquant le coefficient de compensation à ladite différence de valeur calculée ;
- utiliser ladite différence de valeur compensée pour calculer ladite valeur compensée.

De façon avantageuse, le procédé comprend les étapes suivantes consistant à :

- détecter un événement indiquant un besoin d'ajuster ledit seuil de détection en fonction de la valeur représentative de la capacité de l'élément capacitif et d'une tolérance d'erreur de comptage prédéterminée ;
- ajuster ledit seuil de détection avec la valeur représentative de la capacité de l'élément capacitif.

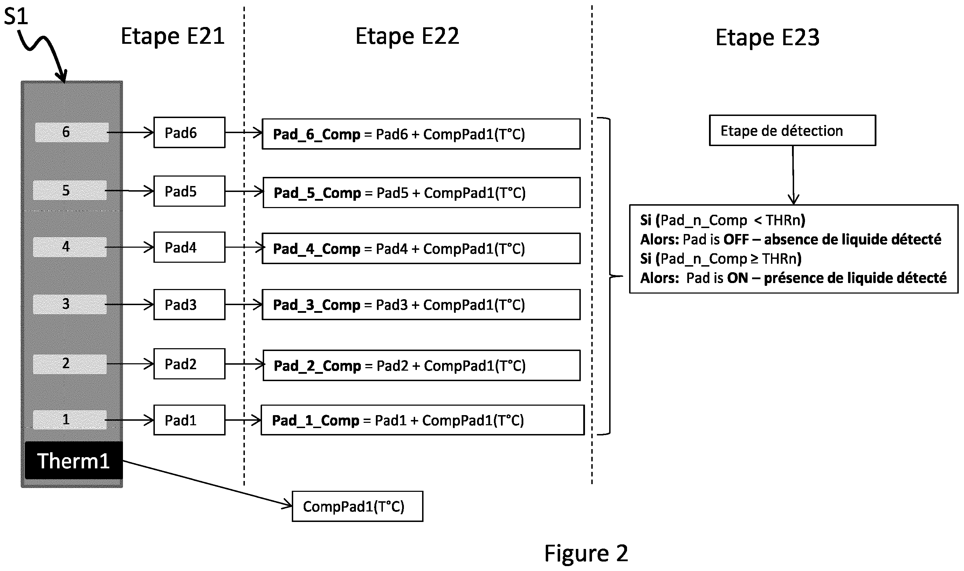

La figure 2 illustre un algorithme de détection du niveau d'un fluide dans un réservoir selon un premier mode de réalisation particulier de l'invention. Dans cet exemple de réalisation, la sonde capacitive SI comprend six éléments capacitifs (1, 2, 3, 4, 5 et 6) et une thermistance (TH1) placée au voisinage de l'élément capacitif 1. Bien entendu, dans un autre mode de réalisation, la sonde capacitive peut comprendre un nombre plus élevé d'éléments capacitifs. La thermistance (Therm1) est configurée pour mesurer la température au voisinage de l'élément capacitif 1. Bien entendu, dans un autre mode de réalisation, la sonde capacitive peut comprendre plusieurs thermistances. Dans un premier autre exemple de réalisation, la sonde capacitive peut comprendre une première thermistance placée au voisinage de l'élément capacitif 1 et une deuxième thermistance placée au voisinage de l'élément capacitif 6. Avec une telle configuration, on peut utiliser les informations fournies par les première et deuxième thermistances pour détecter la présence d'un gradient de température le long de la sonde. Dans un deuxième autre exemple de réalisation, la sonde capacitive peut comprendre une thermistance placée au voisinage de chaque élément capacitif.

A l'étape E21, on obtient une valeur représentative de la capacité de chacun des éléments capacitifs. Dans un mode de réalisation préféré, à l'étape E21 on obtient pour chaque élément capacitif un nombre de comptage ($Pad_1$, $Pad_2$, $Pad_3$, $Pad_4$, $Pad_5$ et $Pad_6$) représentatif du nombre de phases de charge et de décharge de l'élément capacitif.

A l'étape E22, on obtient la température au voisinage de l'élément capacitif 1 au moyen de la thermistance (Therm1) et on détermine une valeur de compensation (CompPadl(T°C)) en utilisant la température mesurée et une table de correspondance préalablement générée. Cette table de correspondance peut être obtenue de manière théorique ou expérimentale. Ensuite pour chaque élément capacitif, on calcule une valeur compensée (ou valeur étalonnée) de la manière suivante :

$$Pad\_n\_Comp = Pad_n + CompPad1(T°C) \qquad (eq.\ 1)$$

n étant le numéro de l'élément capacitif 1, 2, 3, 4, 5 ou 6.

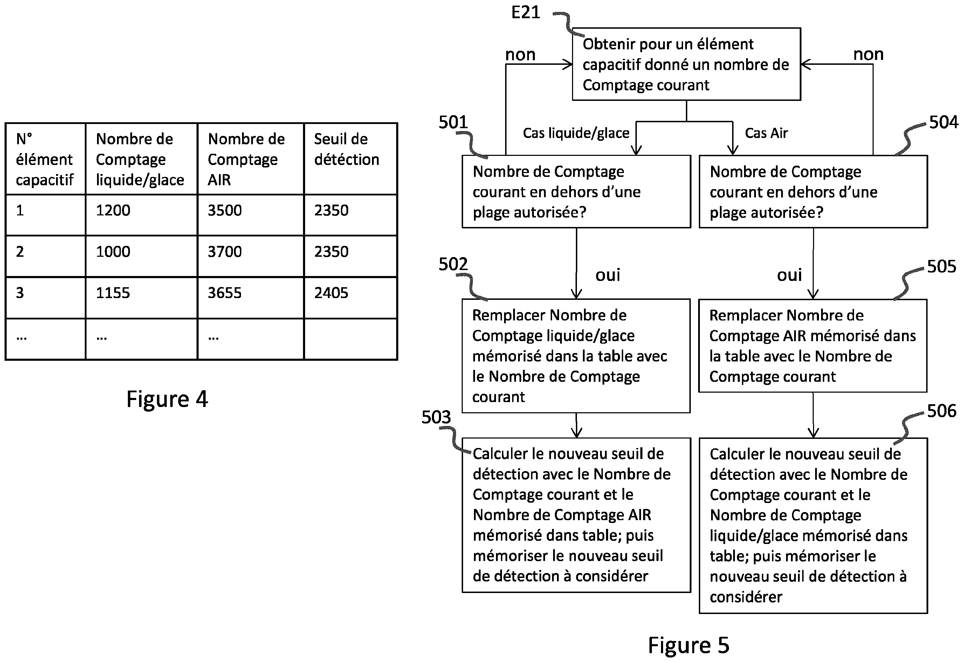

A l'étape E23, on compare chaque valeur compensée à un seuil de détection prédéterminé (THRn). Ainsi, pour un élément capacitif « n », si la valeur compensée (Pad_n_Comp) est supérieure ou égale au seuil de détection (THRn), alors on détecte (c'est-à-dire, on conclut à) la présence du fluide (pouvant être dans un état liquide et/ou solide (i.e. glace)) au niveau donné associé à l'élément capacitif « n », sinon on conclut que l'élément capacitif « n » est dans l'air. Dans un mode de réalisation particulier, le seuil de détection prédéterminé peut être le même pour tous les éléments capacitifs. Dans un autre mode de réalisation particulier illustré à la figure 4, le seuil de détection prédéterminé peut être différent d'un élément capacitif à un autre élément capacitif. La figure 4 illustre une table de comptage. Dans l'exemple de la figure 4, l'élément capacitif 1 est calibré de telle sorte qu'il indique un nombre de comptage de « 1200 » lorsqu'il est en contact avec du liquide ou de la glace, et il indique un nombre de comptage de « 3500 » lorsqu'il est dans l'air (c'est-à-dire, pas en contact avec du liquide ou de la glace). L'élément capacitif 3 est calibré de telle sorte qu'il indique un nombre de comptage de « 1155 » lorsqu'il est en contact avec du liquide ou de la glace, et il indique un nombre de comptage de « 3655 » lorsqu'il est dans l'air (c'est-à-dire, pas en contact avec du liquide ou de la glace). Dans cet exemple, on fixe un seuil de détection à 2350 (soit (1200+3500)/2) pour l'élément capacitif 1 et un seuil de détection à 2405 (soit (1155+3655)/2) pour l'élément capacitif 3.

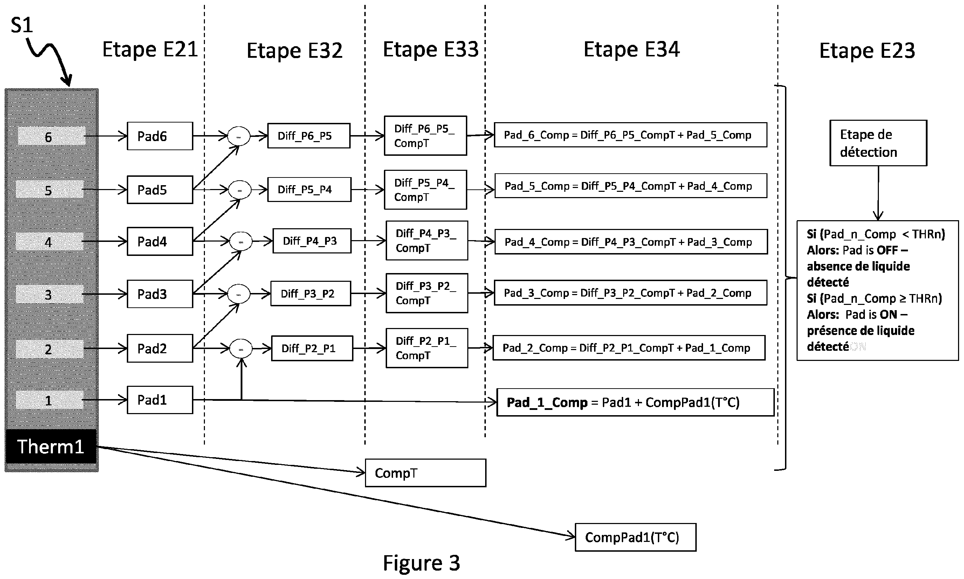

La figure 3 illustre un algorithme de détection du niveau d'un fluide dans un réservoir selon un second mode de réalisation particulier de l'invention. Le second mode de réalisation de la figure 3 diffère du premier mode de réalisation décrit ci-dessus en référence à la figure 2 en ce qu'il met en œuvre des étapes E32, E33 et E34 à la place de l'étape E22. Les étapes E32, E33 et E34 sont décrites ci-après. Les étapes E21 et E23 de l'algorithme de la figure 3 sont identiques aux étapes E21 et E23 de l'algorithme de la figure 2, et ne sont donc pas reprises ci-dessous.

A l'étape E32, on calcule la différence de valeur entre deux éléments capacitifs consécutifs (c'est-à-dire entre un élément capacitif courant à un niveau courant et un élément capacitif supérieur suivant à un niveau supérieur suivant). Ceci permet avantageusement de réduire l'effet du mode commun (c'est-à-dire toute perturbation de la mesure commun à deux éléments capacitifs) dû par exemple à l'épaisseur du plastique ou au gradient de température le long de la sonde. Ainsi, pour chacun des éléments capacitifs 2, 3, 4, 5 et 6, on calcule une différence de valeur (Diff_$P_n$_$P_{n-1}$) de la manière suivante :

$$\text{Diff\_P}_n\_\text{P}_{n-1} = \text{Pad}_n - \text{Pad}_{n-1} \qquad (eq.\ 2)$$

n étant le numéro de l'élément capacitif 2, 3, 4, 5 ou 6.

A l'étape E33, on obtient la température au voisinage de l'élément capacitif 1 au moyen de la thermistance (Therm1) et on détecte la présence ou l'absence d'un gradient de température le long de la sonde à partir de la température mesurée. Si on détecte la présence d'un gradient de température, alors on détermine un coefficient de compensation (CompT) en utilisant la température mesurée et une relation (courbe, table, formule...) théorique, issue de la littérature, de préférence validée expérimentalement. Alternativement, cette relation peut être générée expérimentalement sur des maquettes et/ou des prototypes. Ensuite, pour chaque élément capacitif, on calcule une différence de valeur compensée (Diff_$P_n$_$P_n$-1_ CompT) en appliquant le coefficient de compensation (CompT) à la différence de valeur calculée à l'étape E32. Puis, on passe à l'étape E34.

A l'étape E34, on obtient la température au voisinage de l'élément capacitif 1 au moyen de la thermistance (Therm1) et on détermine une valeur de compensation (CompPadl(T°C)) en utilisant la température mesurée et une table de correspondance préalablement générée. Cette table de correspondance peut être obtenue de manière théorique ou expérimentale. Ensuite, pour l'élément capacitif 1, on calcule une valeur compensée de la manière suivante :

$$\text{Pad\_1\_Comp} = \text{Pad1} + \text{CompPad1(T°C)} \qquad (eq.\ 3)$$

Puis, pour chacun des éléments capacitifs 2, 3, 4, 5 et 6, on calcule une valeur compensée de la manière suivante :

$$\text{Pad\_n\_Comp} = \text{Diff\_ P}_n\_\text{P}_{n-1}\_ \text{ CompT} + \text{Pad\_n-1\_Comp} \qquad (eq.4)$$

n étant le numéro de l'élément capacitif 2, 3, 4, 5 ou 6.

A l'étape E33, lorsque l'on détecte l'absence d'un gradient de température, le calcul de la valeur compensée pour chacun des éléments capacitifs 2, 3, 4, 5 et 6 s'effectue de la manière suivante :

$$\text{Pad\_n\_Comp} = \text{Diff\_ P}_n\_\text{P}_{n-1} + \text{Pad\_n-1\_Comp} \qquad (eq.5)$$

n étant le numéro de l'élément capacitif 2, 3, 4, 5 ou 6.

L'invention concerne également un système de détection d'un niveau de liquide dans un réservoir comprenant :

- une sonde capacitive, la sonde comprenant une colonne d'éléments capacitifs, chaque élément capacitif étant associé à un niveau donné dans le réservoir ;
- unité de traitement configurée pour effectuer les étapes suivantes, pour chaque élément capacitif:
- obtenir une valeur représentative de la capacité de l'élément capacitif ;
- obtenir une valeur de compensation en fonction d'une information de température ;
- obtenir une valeur compensée à partir de la valeur représentative de la capacité de l'élément capacitif et de la valeur de compensation ;
- détecter la présence de liquide en comparant la valeur compensée à un seuil de détection prédéterminé.

Dans un mode de réalisation avantageux, le seuil de détection (THRn) utilisé à l'étape E23 (décrite ci-dessus en relation avec les figures 2 et 3) peut être ajusté dynamiquement pour tenir compte du vieillissement des éléments capacitifs et de la variation de température au voisinage de l'élément capacitif 1. Par conséquent, la valeur représentative de la capacité de l'élément capacitif 1 peut être prise comme référence pour effectuer cet ajustement dynamique.

La figure 5 illustre un organigramme d'un exemple de mise en œuvre d'ajustement dynamique du (ou des) seuil de détection (THRn) utilisé dans le procédé selon l'invention. Dans un mode de réalisation avantageux, cet ajustement dynamique peut s'effectuer à la suite de l'étape E21 (décrite ci-dessus en relation avec les figures 2 et 3).

A l'étape E21 on obtient pour chaque élément capacitif un nombre de comptage courant. Dans l'exemple de la figure 4, l'élément capacitif 1 est associé à un seuil de détection de 2350. Par exemple, à l'étape E21 l'élément capacitif 1 indique un nombre de comptage courant de « 1500 ». Le nombre de comptage courant est inférieur au seuil de détection, on est donc dans un cas de contact potentiel avec du liquide ou de la glace et on passe à l'étape 501.

A l'étape 501, on vérifie si le nombre de comptage courant est situé dans ou en dehors d'une plage autorisée. Dans l'exemple de la figure 4, l'élément capacitif 1 est calibré de telle sorte qu'il indique un nombre de comptage de « 1200 » lorsqu'il est en contact avec du liquide ou de la glace. Par exemple, la tolérance d'erreur de comptage est fixée à ±5% de 1200. Ainsi, à l'étape 501 on détecte que le nombre de comptage courant (1500) est situé en dehors de la plage autorisée de 1140 à 1260. Cet événement indique donc un besoin d'ajuster le seuil de détection. On passe alors à l'étape 502.

A l'étape 502, on remplace dans la table de comptage le nombre de comptage de « 1200 » par le nombre de comptage courant de « 1500 ».

Puis à l'étape 503, on calcule le nouveau seuil de détection avec le nombre de comptage courant de « 1500 » et le nombre de comptage de « 3500 » (indicatif d'un contact avec l'air). Le nouveau seuil est de 2500 (soit (1500+3500)/2) pour l'élément capacitif 1.

L'homme de l'art n'aura aucune difficulté à comprendre que le principe des étapes 501, 502 et 503 décrit ci-dessus est transposable aux étapes 504, 505 et 506.

Avantageusement, on réalise un tel ajustement dynamique du seuil de détection pour chaque élément capacitif de la sonde capacitive.

Avantageusement, le procédé de l'invention comprend en outre une ou plusieurs étapes de détermination de l'état du fluide aux différents niveaux du réservoir, à la sonde dans laquelle chaque élément capacitif est associé à un niveau donné dans le réservoir.

Grâce à des données combinables, issues des propriétés diélectriques du fluide dans lequel la sonde est immergée et de données connues pour l'utilisation des éléments capacitifs de la sonde, il est possible d'établir un modèle thermique pour les éléments capacitifs qui, combiné avec une information de température du fluide, permet de distinguer l'état solide de l'état liquide du milieu, et ce de façon indépendante pour chaque élément capacitif.

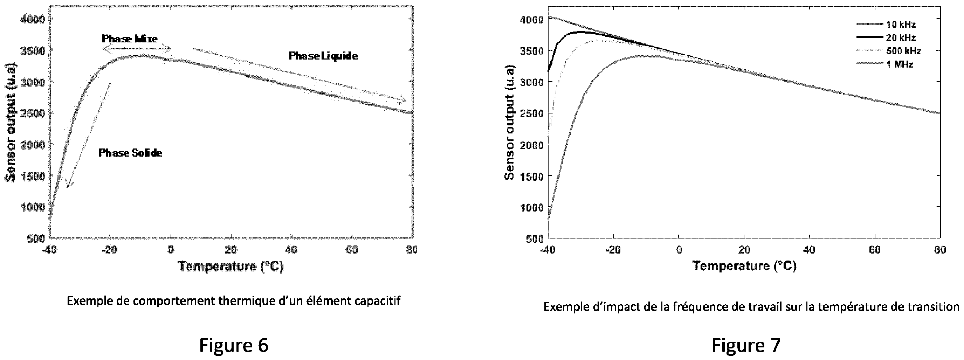

Ce modèle thermique est fonction de la capacité du fluide contenu dans le réservoir, c'est-à-dire la constante diélectrique de ce fluide, mesurée par les éléments capacitifs de la sonde, la constante diélectrique d'un fluide variant fortement avec la température. La constante diélectrique d'un milieu suit un comportement appelé « anomalie diélectrique » qui comporte trois phases distinctes, comme cela est représenté à la figure 6. La première phase, aussi appelée phase mixte, est située autour de la température de transition du fluide et définit le passage du fluide d'un état liquide à un état solide (et vice versa). Cette phase correspond donc à une phase où le fluide est un mélange de liquide et de solide. La seconde phase, appelée phase solide, est située en amont de la température de transition et correspond à la phase pendant laquelle le fluide est uniquement à l'état solide. La troisième, appelée phase liquide, est située en aval de la température de transition et correspond à la phase pendant laquelle le fluide est uniquement à l'état liquide.

Cependant, l'apparition d'un tel comportement des éléments capacitifs est fonction de la fréquence de travail appliquée aux éléments capacitifs, c'est-à-dire la fréquence à laquelle sont excités les éléments capacitifs. En effet, plus la fréquence de travail appliquée aux éléments capacitifs est proche de la fréquence de relaxation du milieu, et plus la température de transition est située avec certitude dans la phase mixte. Au contraire, lorsque la fréquence de travail est éloignée de la fréquence de relaxation du milieu, la phase mixte peut être décalée en amont de la température de transition, le comportement thermique des éléments capacitifs devenant très exponentiel, comme cela est représenté à la figure 7 pour un fluide donné. Dans une situation extrême, la fréquence de travail est très éloignée de la fréquence de relaxation du fluide, ce qui a pour conséquence la disparation de la phase mixte dans le comportement thermique des éléments capacitifs. Dans un tel exemple, le comportement thermique des éléments capacitifs devient exponentiel et il est impossible de distinguer directement l'état du fluide. Toutefois, la température peut donner une indication de l'état du fluide.

Dans les autres situations, le modèle thermique établi sur les bases du comportement thermique des éléments capacitifs et de la fréquence de travail, permet avec une information de la température du fluide de distinguer l'état solide de l'état liquide d'un fluide.

Dès lors, grâce à la pluralité d'éléments capacitifs présents sur la sonde et à leur indépendance les uns vis-à-vis des autres, il est possible de distinguer les différents états du fluide, ainsi que leur localisation au sein du réservoir. Une telle distinction permet la mise en place de stratégies de chauffe particulièrement adaptées en fonction de l'état du fluide. Par exemple, suite à l'actionnement d'un ou plusieurs chauffeurs dans le but de dégeler le fluide entièrement gelé contenu dans le réservoir, il est possible d'arrêter le fonctionnement de ces chauffeurs, dès qu'une quantité prédéterminée de fluide à l'état liquide est disponible. Cette quantité peut être par exemple la quantité minimale de fluide à fournir à l'injcctcur. Il est donc possible d'éviter une surconsommation due au fonctionnement des chauffeurs lorsque cela n'est pas nécessaire.

Avantageusement, le système de détection d'un niveau de liquide de l'invention comprend une unité de traitement configurée pour effectuer la ou les étapes de détermination de l'état du fluide pour tous les niveaux du réservoir pour lesquels est associé un élément capacitif de la sonde. L'unité de traitement est aussi configurée pour mettre en œuvre une stratégie de chauffe associée.

Avantageusement, le système selon l'invention comprend en outre au moins un chauffeur agencé pour chauffer le fluide contenu dans le réservoir lorsque la stratégie de chauffe mise en œuvre par l'unité de traitement le nécessite.

Dans des conditions de température basse, le fluide au sein du réservoir est à l'état solide (gelé). Des chauffeurs sont ainsi activés afin de dégeler une partie du fluide qui passe à l'état liquide et peut ainsi être transmis à l'injecteur. Cependant, il arrive qu'une ou plusieurs poches d'air, aussi appelées cavités, se créent, notamment lorsque la quantité de fluide à injecter est supérieure à la quantité de fluide à l'état liquide disponible. Dès lors, la possibilité de détecter de manière indépendante l'état du fluide à différents niveaux du réservoir, grâce aux éléments capacitifs, permet d'éviter les détections du niveau du liquide non représentatives du fluide réellement présent dans le réservoir.

## Revendications

1. Procédé de détection du niveau d'un fluide dans un réservoir au moyen d'une sonde capacitive, la sonde comprenant une colonne d'éléments capacitifs, chaque élément capacitif étant associé à un niveau donné dans le réservoir, le procédé étant **caractérisé en ce qu'**il comprend les étapes suivantes consistant à, pour chaque élément capacitif :

   - obtenir une valeur représentative de la capacité de l'élément capacitif ;
   - obtenir une valeur de compensation en fonction d'une information de température ;
   - calculer une valeur compensée à partir de la valeur représentative de la capacité de l'élément capacitif et de la valeur de compensation ;
   - détecter la présence du fluide au niveau associé à l'élément capacitif, en comparant la valeur compensée à un seuil de détection prédéterminé.

2. Procédé selon la revendication 1, **caractérisé en ce que** la sonde comprend au moins une thermistance apte à fournir ladite information de température.

3. Procédé selon l'une quelconque des revendications 1 et 2, **caractérisé en ce qu'**il comprend les étapes suivantes consistant à, pour un élément capacitif courant à un niveau courant et un élément capacitif supérieur suivant à un niveau supérieur suivant :

   - calculer une différence de valeur entre la valeur représentative de la capacité de l'élément capacitif courant et la valeur représentative de la capacité de l'élément capacitif supérieur suivant ;
   - utiliser ladite différence de valeur calculée pour calculer ladite valeur compensée.

4. Procédé selon la revendication 3, **caractérisé en ce qu'**il comprend en outre les étapes suivantes consistant à :

   - détecter la présence d'un gradient de température le long de la sonde et déterminer un coefficient de compensation en fonction de ladite information de température ;
   - calculer une différence de valeur compensée en appliquant le coefficient de compensation à ladite différence de valeur calculée ;
   - utiliser ladite différence de valeur compensée pour calculer ladite valeur compensée.

5. Procédé selon l'une quelconque des revendications 1 à 4, **caractérisé en ce qu'**il comprend les étapes suivantes consistant à :

   - détecter un événement indiquant un besoin d'ajuster ledit seuil de détection en fonction de la valeur représentative de la capacité de l'élément capacitif et d'une tolérance d'erreur de comptage prédéterminée ;
   - ajuster ledit seuil de détection avec la valeur représentative de la capacité de l'élément capacitif.

**6.** Système de détection du niveau d'un fluide dans un réservoir comprenant :

- une sonde capacitive, la sonde comprenant une colonne d'éléments capacitifs, chaque élément capacitif étant associé à un niveau donné dans le réservoir ;
- une unité de traitement configurée pour effectuer les étapes suivantes, pour chaque élément capacitif:
- obtenir une valeur représentative de la capacité de l'élément capacitif ;
- obtenir une valeur de compensation en fonction d'une information de température ;
- calculer une valeur compensée à partir de la valeur représentative de la capacité de l'élément capacitif et de la valeur de compensation ;
- détecter la présence du fluide au niveau associé à l'élément capacitif, en comparant la valeur compensée à un seuil de détection prédéterminé.

**Patentansprüche**

**1.** Verfahren zum Erkennen des Füllstands eines Fluids in einem Tank mittels einer kapazitiven Sonde, wobei die Sonde eine Säule kapazitiver Elemente umfasst, wobei jedes kapazitive Element einem bestimmten Füllstand in dem Tank zugeordnet ist, wobei das Verfahren **dadurch gekennzeichnet ist, dass** es die folgenden Schritte umfasst: für jedes kapazitives Element

- Erhalten eines für die Kapazität des kapazitives Elements repräsentativen Wertes,
- Erhalten eines Kompensationswertes in Abhängigkeit von einer Temperaturinformation,
- Berechnen eines kompensierten Wertes ausgehend von dem für die Kapazität des kapazitiven Elements repräsentativen Wert und von dem Kompensationswert;
- Detektieren des Vorhandenseins des Fluids auf dem Füllstand, der dem kapazitiven Element zugeordnet ist, indem der kompensierte Wert mit einem vorgegebenen Detektionsschwellwert verglichen wird.

**2.** Verfahren nach Anspruch 1, **dadurch gekennzeichnet, dass** die Sonde wenigstens einen Thermistor umfasst, der imstande ist, die Temperaturinformation bereitzustellen.

**3.** Verfahren nach einem der Ansprüche 1 und 2, **dadurch gekennzeichnet, dass** es die folgenden Schritte umfasst: für ein aktuelles kapazitives Element auf einem aktuellen Füllstand und ein nächsthöheres kapazitives Element auf einem nächsthöheren Füllstand:

- Berechnen einer Wertdifferenz zwischen dem für die Kapazität des aktuellen kapazitiven Elements repräsentativen Wert und dem für die Kapazität des nächsthöheren kapazitiven Elements repräsentativen Wert;
- Verwenden der berechneten Wertdifferenz, um den kompensierten Wert zu berechnen.

**4.** Verfahren nach Anspruch 3, **dadurch gekennzeichnet**, es ferner die folgenden Schritte umfasst:

- Detektieren des Vorhandenseins eines Temperaturgradienten entlang der Sonde und Ermitteln eines Kompensationskoeffizienten in Abhängigkeit von der Temperaturinformation;
- Berechnen einer kompensierten Wertdifferenz, indem der Kompensationskoeffizient auf die berechnete Wertdifferenz angewendet wird;
- Verwenden der kompensierten Wertdifferenz, um den kompensierten Wert zu berechnen.

**5.** Verfahren nach einem der Ansprüche 1 bis 4, **dadurch gekennzeichnet, dass** es die folgenden Schritte umfasst:

- Detektieren eines Ereignisses, dass einen Bedarf daran angibt, den Detektionsschwellwert in Abhängigkeit von dem für die Kapazität des kapazitiven Elements repräsentativen Wert und von einer vorgegebenen Zählfehlertoleranz abzugleichen;
- Abgleichen des Detektionsschwellwerts mit dem für die Kapazität des kapazitiven Elements repräsentativen Wert.

**6.** System zum Detektieren des Füllstands eines Fluids in einem Tank, umfassend:

- eine kapazitive Sonde, wobei die Sonde eine Säule kapazitiver Elemente umfasst, wobei jedes kapazitive Element einem bestimmten Füllstand in dem Tank zugeordnet ist;

- eine Verarbeitungseinheit, die eingerichtet ist, um, für jedes kapazitive Element, die folgenden Schritte durchzuführen:
- Erhalten eines für die Kapazität des kapazitives Elements repräsentativen Wertes,
- Erhalten eines Kompensationswertes in Abhängigkeit von einer Temperaturinformation,
- Berechnen eines kompensierten Wertes ausgehend von dem für die Kapazität des kapazitiven Elements repräsentativen Wert und von dem Kompensationswert;
- Detektieren des Vorhandenseins des Fluids auf dem Füllstand, der dem kapazitiven Element zugeordnet ist, indem der kompensierte Wert mit einem vorgegebenen Detektionsschwellwert verglichen wird.

**Claims**

1. A method for detecting the level of a fluid in a tank by means of a capacitive sensor, the sensor comprising a column of capacitive elements, each capacitive element being associated with a given level in the tank, the method being **characterized in that** it comprises the following steps consisting in, for each capacitive element:

   - obtaining a value representing the capacitance of the capacitive element;
   - obtaining a compensation value as a function of temperature information;
   - calculating a compensated value from the value representing the capacitance of the capacitive element and from the compensation value;
   - detecting the presence of the fluid at the level associated with the capacitive element, by comparing the compensated value with a predetermined detection threshold.

2. The method as claimed in claim 1, **characterized in that** the sensor comprises at least one thermistor that can provide said temperature information.

3. The method as claimed in any one of claims 1 or 2, **characterized in that** it comprises the following steps consisting in, for a current capacitive element at a current level and a following higher capacitive element at a following higher level:

   - calculating a value difference between the value representing the capacitance of the current capacitive element and the value representing the capacitance of the following higher capacitive element;
   - using said calculated value difference in order to calculate said compensated value.

4. The method as claimed in claim 3, **characterized in that** it further comprises the following steps consisting in:

   - detecting the presence of a temperature gradient along the sensor and determining a compensation coefficient as a function of said temperature information;
   - calculating a compensated value difference by applying the compensation coefficient to said calculated value difference;
   - using said compensated value difference in order to calculate said compensated value.

5. The method as claimed in any one of claims 1-4, **characterized in that** it comprises the following steps consisting in:

   - detecting an event indicating a need to adjust said detection threshold as a function of the value representing the capacitance of the capacitive element and a predetermined count error tolerance;
   - adjusting said detection threshold with the value representing the capacitance of the capacitive element.

6. A system for detecting the level of a fluid in a tank comprising:

   - a capacitive sensor, the sensor comprising a column of capacitive elements, each capacitive element being associated with a given level in the tank;
   - a processing unit configured to carry out the following steps, for each capacitive element:
   - obtaining a value representing the capacitance of the capacitive element;
   - obtaining a compensation value as a function of temperature information;
   - calculating a compensated value from the value representing the capacitance of the capacitive element and from the compensation value;
   - detecting the presence of the fluid at the level associated with the capacitive element, by comparing the compensated value with a predetermined detection threshold.

6 → P6

5 → P5

4 → P4

3 → P3

2 → P2

1 → P1

Algorithme de detection

**Si** (Pn < Thr)
**Alors:** Pad is **OFF – absence de liquide détecté**
**Si** (Pn ≥ Thr )
**Alors:** Pad is **ON – présence de liquide détecté**

## Figure 1

**Figure 2**

EP 3 377 862 B1

EP 3 377 862 B1

S1

**Etape E21** | **Etape E32** | **Etape E33** | **Etape E34** | **Etape E23**

| 6 | → | Pad6 | → ( − ) → | Diff_P6_P5 | → | Diff_P6_P5_CompT | → | Pad_6_Comp = Diff_P6_P5_CompT + Pad_5_Comp |

| 5 | → | Pad5 | → ( − ) → | Diff_P5_P4 | → | Diff_P5_P4_CompT | → | Pad_5_Comp = Diff_P5_P4_CompT + Pad_4_Comp |

| 4 | → | Pad4 | → ( − ) → | Diff_P4_P3 | → | Diff_P4_P3_CompT | → | Pad_4_Comp = Diff_P4_P3_CompT + Pad_3_Comp |

| 3 | → | Pad3 | → ( − ) → | Diff_P3_P2 | → | Diff_P3_P2_CompT | → | Pad_3_Comp = Diff_P3_P2_CompT + Pad_2_Comp |

| 2 | → | Pad2 | → ( − ) → | Diff_P2_P1 | → | Diff_P2_P1_CompT | → | Pad_2_Comp = Diff_P2_P1_CompT + Pad_1_Comp |

| 1 | → | Pad1 | → | | | | → | **Pad_1_Comp** = Pad1 + CompPad1(T°C) |

**Therm1**

CompT

CompPad1(T°C)

Etape de détection

Si (Pad_n_Comp < THRn)
Alors: Pad is OFF −
absence de liquide
détecté
Si (Pad_n_Comp ≥ THRn)
Alors: Pad is ON −
présence de liquide
détecté

## Figure 3

| N° élément capacitif | Nombre de Comptage liquide/glace | Nombre de Comptage AIR | Seuil de détéction |
|---|---|---|---|
| 1 | 1200 | 3500 | 2350 |
| 2 | 1000 | 3700 | 2350 |
| 3 | 1155 | 3655 | 2405 |
| ... | ... | ... | |

Figure 4

E21

Obtenir pour un élément capacitif donné un nombre de Comptage courant

non → ... ← non

Cas liquide/glace → 501 Nombre de Comptage courant en dehors d'une plage autorisée?

Cas Air → 504 Nombre de Comptage courant en dehors d'une plage autorisée?

502 oui → Remplacer Nombre de Comptage liquide/glace mémorisé dans la table avec le Nombre de Comptage courant

505 oui → Remplacer Nombre de Comptage AIR mémorisé dans la table avec le Nombre de Comptage courant

503 → Calculer le nouveau seuil de détection avec le Nombre de Comptage courant et le Nombre de Comptage AIR mémorisé dans table; puis mémoriser le nouveau seuil de détection à considérer

506 → Calculer le nouveau seuil de détection avec le Nombre de Comptage courant et le Nombre de Comptage liquide/glace mémorisé dans table; puis mémoriser le nouveau seuil de détection à considérer

Figure 5

Exemple d'impact de la fréquence de travail sur la température de transition

Figure 7

Exemple de comportement thermique d'un élément capacitif

Figure 6

## RÉFÉRENCES CITÉES DANS LA DESCRIPTION

**Documents brevets cités dans la description**

- US 4589077 A

- US 2009187357 A